# EUROPEAN PATENT APPLICATION

(11) **EP 3 540 712 A1**
(43) Date of publication of application: **18.09.2019**
(21) Application number: 17869421.2
(22) Date of filing: 26.10.2017
(51) Int. Cl.: G08G 1/16

(54) **INFORMATION PROCESSING DEVICE, INFORMATION PROCESSING METHOD, PROGRAM, AND MOVING BODY**

(30) Priority: 09.11.2016 JP 2016218521
(71) Applicant: Sony Corporation, Tokyo 108-0075 (JP); Sony Semiconductor Solutions Corporation, Atsugi-shi, Kanagawa 243-0014 (JP)
(72) Inventor: HASHIMOTO, Hirokazu, Atsugi-shi Kanagawa 243-0014 (JP); SAITO, Keisuke, Tokyo 108-0075 (JP)
(74) Representative: Witte, Weller & Partner Patentanwälte mbB
(86) International application number: PCT/JP2017/038706
(87) International publication number: WO 2018/088224

(57) **Abstract**

The present technology relates to an information processing apparatus, an information processing method, a program, and a movable object, which notify risk of collision or contact with a peripheral moving body plainly. The information processing apparatus includes a moving-body detection unit that detects the moving body around the movable object on the basis of information input from a sensor, and an image processing unit that generates a first image which is displayed in association with the moving body, a shape of the first image being changed depending on a moving direction and moving speed of the moving body. The present technology may be applied to, for example, an apparatus, a system, or a vehicle that supports driving for preventing collision or contact with the moving body.

## Description

### Technical Field

The present technology relates to an information processing apparatus, an information processing method, a program, and a movable object, and particularly relates to an information processing apparatus, an information processing method, a program, and a movable object, which are preferably used in a case that risk of collision or contact with a peripheral moving body is notified.

### Background Art

In the past, a technology that notifies a driver of risk of collision or contact with a vehicle, a bicycle, a pedestrian, or the like was developed. For example, it is proposed that, in an image where the periphery of the vehicle is imaged, a dynamic pattern such as a zebra pattern is displayed and given to a target object approaching the vehicle (For example, see Patent Literature 1).

### Citation List

### Patent Literature

Patent Literature 1: Japanese Patent Application Laid-open No. 2014-239326

### Disclosure of Invention

### Technical Problem

On the other hand, along with prevalence of automatic driving in the future, at least a part of driving operations will be automated, and it is expected that opportunities for the driver that has the low driving skill to drive are increased. Therefore, to prevent an accident more surely, it is desired that risk of collision or contact is more surely recognized by the driver.

In view of the above-mentioned circumstances, it is an object of the present technology to notify risk of collision or contact with a peripheral moving body plainly.

### Solution to Problem

An information processing apparatus in a first side surface of the present technology includes a moving-body detection unit that detects a moving body around a movable object on the basis of information input from a sensor, and an image processing unit that generates a first image which is displayed in association with the moving body, a shape of the first image being changed depending on a moving direction and moving speed of the moving body.

The first image may include a bar that extends in the moving direction from the moving body, a length of the moving direction being changed depending on the moving speed of the moving body.

A width of the bar may be changed depending on a width of the moving body.

The first image may include a circular-sector-shaped figure that spreads in the moving direction of the moving body from the moving body, a length of the figure in the moving direction being changed depending on the moving speed of the moving body.

An angle of the circular-sector-shaped figure may be changed depending on prediction accuracy of the moving direction of the moving body.

The image processing unit may change a display effect of the first image on the basis of a degree of risk of collision or contact of the moving body with the movable object.

The image processing unit may change at least one of a color or transmittance of the first image on the basis of the degree of risk.

The image processing unit may control presence or absence of display of the first image with respect to the moving body on the basis of a degree of risk of collision or contact of the moving body with the movable object.

The image processing unit may generate a second image indicating a position of the moving body.

The second image may include a frame surrounding the moving body.

The image processing unit may change the second image on the basis of a type of the moving body.

The type of the moving body may be classified into at least four types including a vehicle, a motorbike, a bicycle, and a pedestrian.

The image processing unit may superimpose the first image on a peripheral image, which is an image showing a periphery of the movable object, or a field of view of a person on the movable object.

The image processing unit may superimpose the first image on a road surface in the peripheral image or in the field of view of the person.

The image processing unit may superimpose a grid on the road surface in the peripheral image or in the field of view of the person.

The image processing unit may further control display of a signal indicating a degree of risk of collision or contact of the movable object with any of the peripheral moving body.

The information processing apparatus may further include a motion predicting unit that predicts a motion of the detected moving body.

An information processing method in a second side surface of the present technology includes a moving-body detection step of detecting a moving body around a movable object, and an image processing step of generating an image which is displayed in association with the moving body, a shape of the image being changed depending on a moving direction and moving speed of the moving body around the movable object.

A program in the second side surface of the present technology causes a computer to execute processing including a moving-body detection step of detecting a moving body around a movable object, and an image processing step of generating an image which is displayed in association with the moving body, a shape of the image being changed depending on a moving direction and moving speed of the moving body around the movable object.

A movable object in a third side surface of the present technology includes a sensor that is arranged on a main body and is used for detecting a peripheral status, a moving-body detection unit that detects a peripheral moving body on the basis of a detection result from the sensor, a motion predicting unit that predicts a motion of the detected moving body, and a display unit that displays an image, a shape of which is changed depending on a moving direction and moving speed of the detected moving body.

In the first side surface or the second side surface of the present technology, the moving body around the movable object is detected, and the image that is displayed in association with the moving body is generated, the shape of the image being changed depending on the moving direction and the moving speed of the moving body.

In the third side surface of the present technology, the peripheral moving body is detected, the motion of the detected moving body is predicted, and the image is displayed, the shape of the image being changed depending on the moving direction and the moving speed of the detected moving body.

### Advantageous Effects of Invention

According to the first to third side surfaces of the present technology, the moving direction and the moving speed of the moving body around the movable object are shown. Particularly, according to the first to third side surfaces of the present technology, risk of collision or contact with the peripheral moving body may be notified plainly.

Note that the effects described above are not limitative, but any effect described in the present disclosure may be produced.

### Brief Description of Drawings

[Fig. 1] A block diagram showing an embodiment of an on-vehicle system to which the present technology is applied.
[Fig. 2] A diagram showing an example of arrangement positions of cameras.
[Fig. 3] A diagram showing an example of an arrangement position of a display unit.
[Fig. 4] A flowchart illustrating peripheral-watching processing.
[Fig. 5] A diagram showing arrangement examples of peripheral images in a peripheral-watching image.
[Fig. 6] A diagram showing a first example of the peripheral-watching image.
[Fig. 7] A diagram illustrating a display position of a grid.
[Fig. 8] A diagram showing a second example of the peripheral-watching image.
[Fig. 9] A diagram showing a third example of the peripheral-watching image.
[Fig. 10] A diagram showing a fourth example of the peripheral-watching image.
[Fig. 11] A diagram showing a fifth example of the peripheral-watching image.
[Fig. 12] A diagram showing a structure example of a computer.

### Mode(s) for Carrying Out the Invention

Hereinafter, an embodiment of the present technology will be described. Descriptions will be made in the order described below.
1. Embodiment
2. Modified Example
3. Other

### <<1. Embodiment>>

### <1-1. Structure Example of On-vehicle System>

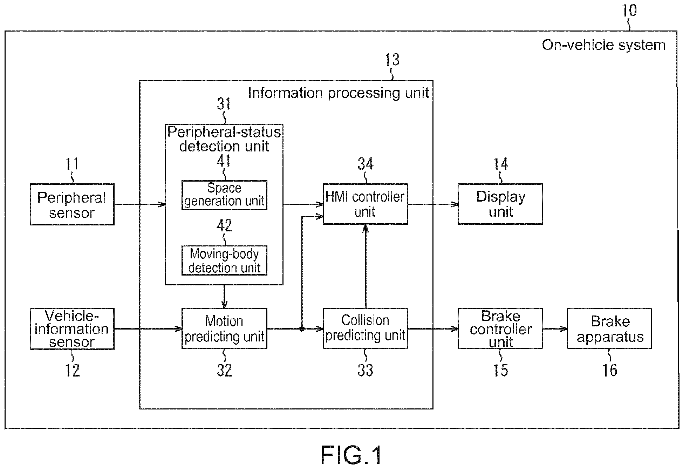

Fig. 1 is a block diagram showing an embodiment of an on-vehicle system to which the present technology is applied.

The on-vehicle system 10 is a system that is mounted on a vehicle and supports driving. For example, the on-vehicle system 10 watches the periphery of the vehicle, and performs processing for preventing the vehicle from colliding or contacting with a peripheral vehicle, bicycle, person, or the like. More specifically, the on-vehicle system 10 notifies risk of collision or contact, controls a brake apparatus such as a brake system for avoiding collision or contact, and the like.

Note that the vehicle on which the on-vehicle system 10 is mounted is not particularly limited, and examples of the vehicle include, for example, a three-wheel truck, a small-sized truck, a small-sized car, a large-sized car, a large-sized bus, a large-sized truck, a large-sized special vehicle, a small-sized special vehicle, and the like. Moreover, hereinafter, the vehicle on which the on-vehicle system 10 is mounted is also referred to as own vehicle, and a vehicle other than the own vehicle is also referred to as another vehicle.

The on-vehicle system 10 includes a peripheral sensor 11, a vehicle-information sensor 12, an information processing unit 13, a display unit 14, a brake controller unit 15, and a brake apparatus 16.

The peripheral sensor 11 includes various sensors for detecting the peripheral status of the own vehicle. For example, the peripheral sensor 11 includes a camera (image sensor) for photographing the periphery of the own vehicle, a short-distance sensor for detecting an object near the own vehicle, a long-distance sensor for detecting an object far from the own vehicle, and the like. Examples of the short-distance sensor include, for example, an ultrasonic sensor and the like. Examples of the long-distance sensor include, for example, radar, lidar, a TOF (Time of Flight) sensor, and the like. Each sensor of the peripheral sensor 11 supplies data (hereinafter, referred to as peripheral sensor data) indicating information including each of detection results to a peripheral-status detection unit 31, respectively.

Note that, hereinafter, an image photographed by each camera of the peripheral sensor 11 is referred to as peripheral image, and data indicating the peripheral image is referred to as peripheral image data. The peripheral image data is one kind of the peripheral sensor data.

The vehicle-information sensor 12 includes various sensors for detecting a motion of the own vehicle. For example, the vehicle-information sensor 12 includes a speed sensor, a steering-angle sensor, a GPS (global positioning system) receiver, and the like. The vehicle-information sensor 12 supplies data (hereinafter, referred to as vehicle sensor data) indicating each of detection results to a motion predicting unit 32, respectively.

Note that sensors included in the own vehicle beforehand may be used as a part of or all of the peripheral sensor 11 and the vehicle-information sensor 12.

The information processing unit 13 includes, for example, an ECU (Electronic Control Unit) and the like. The information processing unit 13 also includes the peripheral-status detection unit 31, the motion predicting unit 32, a collision predicting unit 33, and an HMI (Human Machine Interface) controller unit 34.

The peripheral-status detection unit 31 detects the peripheral status of the own vehicle on the basis of the peripheral sensor data. The peripheral-status detection unit 31 includes a space generation unit 41 and a moving-body detection unit 42.

The space generation unit 41 generates a three-dimensional space map showing a shape, a position, and the like of a peripheral object of the own vehicle on the basis of the peripheral sensor data. The space generation unit 41 supplies the three-dimensional space map to the motion predicting unit 32 and the HMI controller unit 34. Moreover, the space generation unit 41 supplies the peripheral image data of the peripheral sensor data to the HMI controller unit 34.

The moving-body detection unit 42 detects a peripheral moving body of the own vehicle on the basis of the peripheral sensor data and the three-dimensional space map. The moving-body detection unit 42 supplies a detection result of the moving body to the motion predicting unit 32 and the HMI controller unit 34.

The motion predicting unit 32 predicts the motion of the own vehicle on the basis of the vehicle sensor data. Moreover, the motion predicting unit 32 predicts a motion of the peripheral moving body of the own vehicle on the basis of the three-dimensional space map and the detection result of the moving body. The motion predicting unit 32 supplies prediction results of the motions of the own vehicle and the peripheral moving body to the collision predicting unit 33 and the HMI controller unit 34.

The collision predicting unit 33 predicts collision of the peripheral moving body of the own vehicle on the basis of the prediction results of the motions of the own vehicle and the peripheral moving body. The collision predicting unit 33 supplies a prediction result of collision to the HMI controller unit 34 and the brake controller unit 15.

The HMI controller unit 34 controls an HMI of the own vehicle. For example, the HMI controller unit 34 generates a peripheral-watching image data for displaying a peripheral-watching image that shows the peripheral status of the own vehicle on the basis of the three-dimensional space map, the detection result of the peripheral moving body of the own vehicle, and the prediction results of the motion of the peripheral moving body and collision. The HMI controller unit 34 supplies the peripheral-watching image data to the display unit 14, and displays the peripheral-watching image. In this case, the HMI controller unit 34 functions as an image processing unit.

The display unit 14 includes, for example, various displays and the like. The display unit 14 displays various images such as the peripheral-watching image under control by the HMI controller unit 34.

The brake controller unit 15 includes, for example, an ECU (Electronic Control Unit) and the like. The brake controller unit 15 controls the brake apparatus 16, and performs emergency stop of the own vehicle and the like on the basis of the prediction result of collision by the collision predicting unit 33.

The brake apparatus 16 includes, for example, a brake system of the own vehicle and the like.

### <1-2. Arrangement Example of Camera>

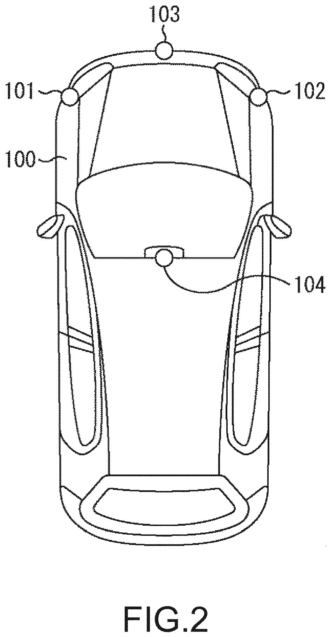

Fig. 2 shows an arrangement example of cameras included in the peripheral sensor 11.

A camera 101 is arranged, for example, near the left end of a front bumper of a vehicle 100. The camera 101 photographs the left direction of the vehicle 100 including a region that is a blind spot of a driver, and supplies an image data indicating an image (hereinafter, referred to as left image) that is obtained by photographing to the peripheral-status detection unit 31.

A camera 102 is arranged, for example, near the right end of the front bumper of the vehicle 100. The camera 102 photographs the right direction of the vehicle 100 including a region that is a blind spot of the driver, and supplies an image data indicating an image (hereinafter, referred to as right image) that is obtained by photographing to the peripheral-status detection unit 31.

A camera 103 is arranged, for example, near a front grille of the vehicle 100. The camera 102 photographs the front of the vehicle 100 including a region that is a blind spot of the driver, and supplies an image data indicating an image (hereinafter, referred to as front image A) that is obtained by photographing to the peripheral-status detection unit 31.

A camera 104 is arranged, for example, near a rearview mirror in the vehicle 100. The camera 104 photographs the front of the vehicle 100, and supplies an image data indicating an image (hereinafter, referred to as front image B) that is obtained by photographing to the peripheral-status detection unit 31.

### <1-3. Arrangement Example of Display Unit 14>

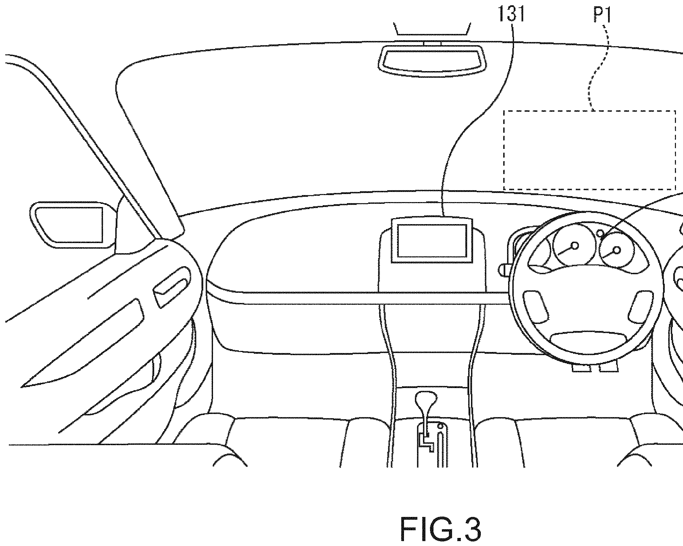

Fig. 3 shows an arrangement example of the display unit 14.

With respect to the display unit 14, equipment that is included beforehand in the own vehicle may be used, and an exclusive display and the like may also be provided. For example, a display 131 and an instrument panel 132 in a car navigation system of the own vehicle may be used as the display unit 14. Moreover, for example, the display unit 14 may include a transmission-type display that is provided by superimposed on a region P1 in the front of the driver's seat of a windshield 133 of the own vehicle.

### <1-4. Peripheral-watching Processing>

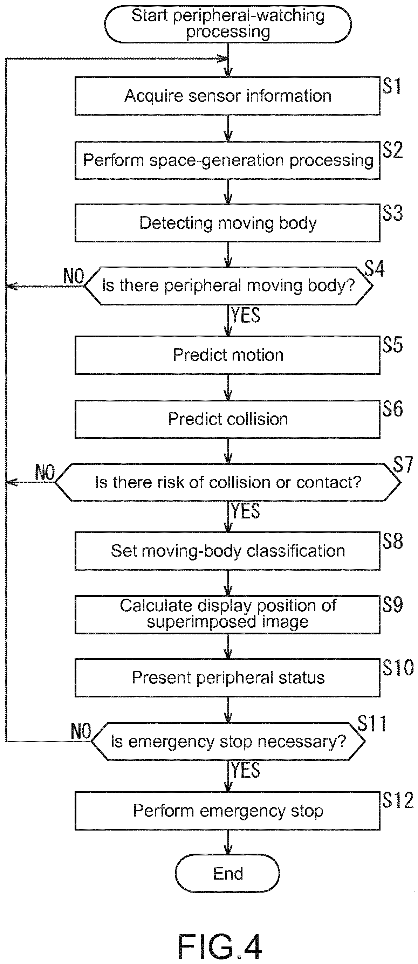

Next, with reference to a flowchart in Fig. 4, peripheral-watching processing executed by the on-vehicle system 10 will be described. The processing is started, for example, when the own vehicle is executed and an operation for starting driving is performed, for example, when an ignition switch, a power switch, a start switch, or the like of the own vehicle is turned on. Moreover, the processing ends, for example, when an operation for ending driving is performed, for example, when the ignition switch, the power switch, the start switch, or the like of the own vehicle is turned off.

In a step S1, the information processing unit 13 acquires sensor information. Specifically, the peripheral-status detection unit 31 acquires the peripheral sensor data from each sensor of the peripheral sensor 11. The motion predicting unit 32 acquires the vehicle sensor data from each sensor of the vehicle-information sensor 12.

In a step S2, the space generation unit 41 performs space-generation processing. In other words, the space generation unit 41 generates (or updates) the three-dimensional space map showing the shape, the position, and the like of the peripheral object of the own vehicle on the basis of the peripheral sensor data. Note that examples of the peripheral object of the own vehicle include not only the moving body, but also a stationary object (for example, building, road surface, and the like). The space generation unit 41 supplies the generated three-dimensional space map to the motion predicting unit 32 and the HMI controller unit 34.

Note that an arbitrary method may be used as a method of generating the three-dimensional space map. For example, a technology such as SLAM (Simultaneous Localization and Mapping) is used.

In a step S3, the moving-body detection unit 42 detects the moving body. Specifically, the moving-body detection unit 42 detects the peripheral moving body of the own vehicle on the basis of the peripheral sensor data and the three-dimensional space map. For example, the moving-body detection unit 42 detects presence or absence of the peripheral moving body of the own vehicle, the type, the size, the shape, the position, and the like of the moving body. The moving-body detection unit 42 supplies the detection result of the moving body to the motion predicting unit 32 and the HMI controller unit 34.

Note that an arbitrary method may be used as a method of detecting the moving body. Moreover, examples of the moving body to be detected include the moving body that actually moves, but also the moving body that is temporarily still such as a stopping vehicle or bicycle and a stopping pedestrian.

Furthermore, the moving-body detection unit 42 may also detect the peripheral moving body of the own vehicle on the basis of, for example, only the peripheral sensor data without the three-dimensional space map. In this case, the processing in the step S2 and the processing the step S3 may be replaced with each other.

In a step S4, the moving-body detection unit 42 determines whether there is the peripheral moving body or not on the basis of a result of the processing in the step S3. In a case that it is determined that there is no peripheral moving body, processing returns to the step S1.

After that, the processing in the steps S1 to S4 is repeatedly executed until it is determined that there is the peripheral moving body in the step S4.

On the other hand, in a case that it is determined that there is the peripheral moving body in the step S4, processing goes to a step S5.

In the step S5, the motion predicting unit 32 predicts the motion. Specifically, the motion predicting unit 32 predicts moving speed, a moving direction, and the like of the own vehicle on the basis of the vehicle sensor data. Moreover, the motion predicting unit 32 predicts moving speed, a moving direction, and the like of the peripheral moving body of the own vehicle on the basis of the three-dimensional space map and the detection result of the peripheral moving body of the own vehicle. The motion predicting unit 32 supplies prediction results to the collision predicting unit 33 and the HMI controller unit 34.

Note that an arbitrary method may be used as a method of predicting the motion.

In a step S6, the collision predicting unit 33 predicts collision. Specifically, the collision predicting unit 33 predicts whether the peripheral moving body of the own vehicle collides or contacts with the own vehicle or not, and required time until the moving body that may collide or contact with actually collides or contacts with the own vehicle (hereinafter, referred to as collision prediction time) on the basis of the prediction results of the motions of the own vehicle and the peripheral moving body.

Moreover, the collision predicting unit 33 predicts a degree of risk of collision or contact of each of the moving bodies with the own vehicle, and sets a rank on the basis of definitions that are defined beforehand. For example, the moving body in rest and the moving body that is moving in a direction away from the own vehicle are set at a degree of risk 1. Among the moving bodies that are approaching the own vehicle, the moving body, the collision prediction time of which exceeds T1 seconds (for example, five seconds) is set at a degree of risk 2. Among the moving bodies that are approaching the own vehicle, the moving body, the collision prediction time of which is within T1 seconds and exceeds T2 seconds (for example, one second) is set at a degree of risk 3. Among the moving bodies that are approaching the own vehicle, the moving body, the collision prediction time of which is within T2 seconds is set at a degree of risk 4.

Note that the moving body in rest and the moving body that is moving in the direction away from the own vehicle may also be set at any one of the degrees of risk 2 to 4 on the basis of the collision prediction times.

The collision predicting unit 33 supplies the prediction result of collision to the HMI controller unit 34 and the brake controller unit 15.

In a step S7, the collision predicting unit 33 determines whether there is risk of collision or contact or not. For example, in a case that there is no peripheral moving body of the own vehicle that has the degree of risk 3 or more, the collision predicting unit 33 determines that there is no risk of collision and contact, and processing returns to the step S1.

After that, the processing in the steps S1 to S7 is repeatedly executed until it is determined that there is risk of collision or contact in the step S7.

On the other hand, for example, in a case that there is the peripheral moving body of the own vehicle that has the degree of risk 3 or more, the collision predicting unit 33 determines that there is risk of collision or contact in the step S7, and processing goes to a step S8.

In the step S8, the HMI controller unit 34 sets a moving-body classification. For example, the HMI controller unit 34 classifies the moving body detected by the moving-body detection unit 42 into five types of vehicle, motorbike, bicycle, pedestrian, and other. Note that a motorbike is one kind of vehicles, and here, the motorbike is distinguished from vehicles other than the motorbike.

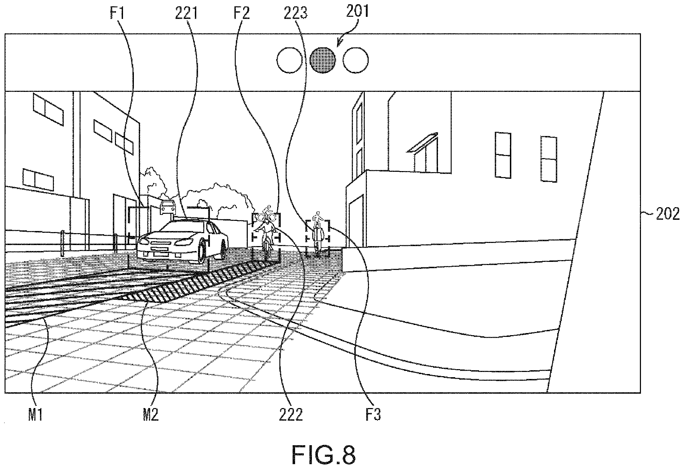

In a step S9, the HMI controller unit 34 calculates a display position of a superimposed image. The superimposed image includes, for example, a frame (hereinafter, referred to as moving-body frame) showing a position of each of the moving bodies, and a bar (hereinafter, referred to as motion prediction bar) showing a predicted motion of each of the moving bodies. As described below with reference to Fig. 8, in the peripheral-watching image presented by the driver, the moving-body frame and the motion prediction bar is superimposed on the peripheral image and is displayed with respect to each of the moving bodies.

Therefore, the HMI controller unit 34 calculates the display position of the moving-body frame corresponding to each of the moving bodies in the three-dimensional space map on the basis of the position of each of the moving bodies in the three-dimensional space map, the height and the width of each of the moving bodies seen from the direction of movement of each of the moving bodies, and the like.

Moreover, the HMI controller unit 34 calculates the position of each of the moving bodies after x seconds (for example, after one second) in the three-dimensional space map on the basis of a result of predicting the motion of each of the moving bodies. Next, the HMI controller unit 34 calculates the display position of the motion prediction bar corresponding to each of the moving bodies in the three-dimensional space map on the basis of the current position and the position after x seconds of each of the moving bodies in the three-dimensional space map. For example, the HMI controller unit 34 calculates the length and the direction of the motion prediction bar by making the front end of the current direction of movement of each of the moving bodies the start point, and by making the front end of the direction of movement after x seconds of each of the moving bodies the end point.

In a step S10, the on-vehicle system 10 presents the peripheral status. Specifically, the HMI controller unit 34 converts the display position of the superimposed image (moving-body frame, motion prediction bar, and the like) in the three-dimensional space map to the display position in the peripheral image presented to the driver. Moreover, the HMI controller unit 34 converts the position of a road surface in the three-dimensional space map to the display position in the peripheral image, and calculates the display position of a grid indicating the position of the road surface in the peripheral image. Then, the HMI controller unit 34 generates the peripheral-watching image data indicating the peripheral-watching image, and supplies the peripheral-watching image data to the display unit 14. The display unit 14 displays the peripheral-watching image.

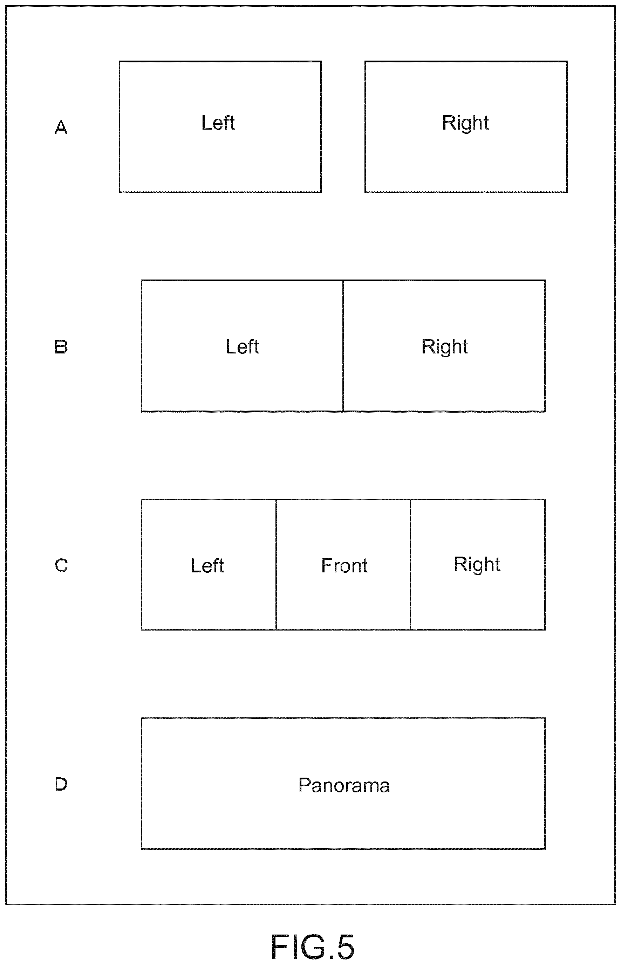

Here, with reference to Figs. 5 to 9, specific examples of the peripheral-watching image will be described.

Fig. 5 shows arrangement examples of the peripheral image in the peripheral-watching image.

In an example of Fig. 5A, the left image and the right image are arranged away from each other. Each of the left and right images may be displayed on one display unit, and alternatively, each of the left and right images may be displayed on two display units that are arranged away from each other.

In an example of Fig. 5B, the left image and the right image are arranged side by side.

In an example of Fig. 5C, the left image, the front image (front image A or front image B), and the right image are arranged side by side.

In an example of Fig. 5D, the left image, at least one of the front image A or the front image B, and the panorama image that is generated on the basis of the right image are arranged.

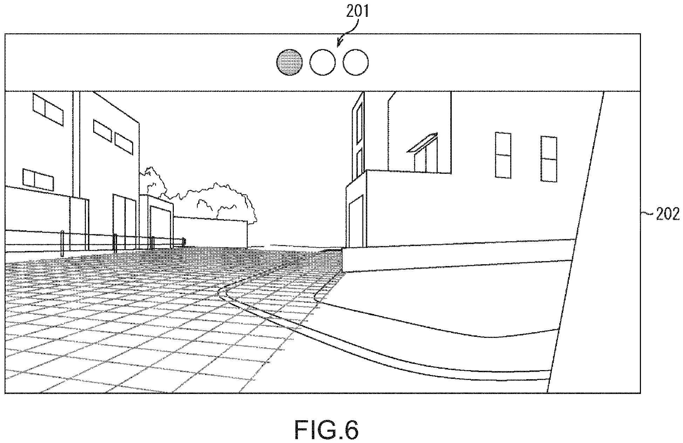

Fig. 6 shows a specific example of the peripheral-watching image. Note that, in Fig. 6, an example of a part in which the right image in Figs. 5A to 5C is displayed of the peripheral-watching image is shown. Moreover, an example in which there is no peripheral moving body of the own vehicle is shown.

In the peripheral-watching image, a signal 201 and a peripheral image 202 (in this example, right image) are vertically arranged.

The signal 201 is displayed independently and separately from a signal in the real world in the peripheral image, and shows the overall degree of risk of the periphery of the own vehicle. For example, in a case that there is no moving body that has the degree of risk 3 or more in the peripheral image 202, a blue lamp of the signal 201 that shows it is safe lights up. For example, in a case that there is the moving body that has the degree of risk 3 and there is no moving body that has the degree of risk 4 in the peripheral image 202, a yellow lamp of the signal 201 that shows it is necessary to be paid attention lights up. For example, in a case that there is the moving body that has the degree of risk 4 in the peripheral image 202, a red lamp of the signal 201 that shows it is dangerous lights up.

Note that the signal 201 may be displayed in each of the peripheral images in the peripheral-watching image, and alternatively, the signal 201 may be displayed in only one of all of the peripheral images. In the former case, on the basis of the degree of risk of the moving body in each of the peripheral images, the lighting lamp of the signal 201 corresponding to each of the peripheral images is individually switched. In the latter case, on the basis of the degrees of risk of the moving bodies in all of the peripheral images, the lighting lamp of the signal 201 is switched.

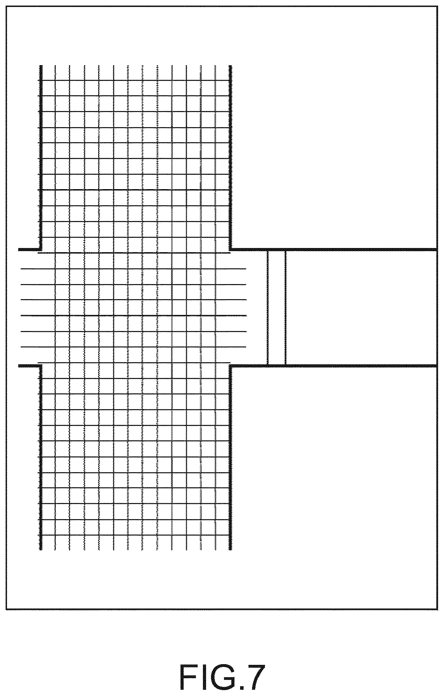

Moreover, the grid is superimposed and displayed on the road surface in the peripheral image 202. Due to this, the driver easily grasps the position of the road surface, and the position and the moving direction of the moving body or the like on the road surface. As shown in Fig. 7, the grid is displayed corresponding to the position of an intersection, for example.

Fig. 8 shows an example in a case that there are the moving bodies in the peripheral image 202 of the peripheral-watching image in Fig. 6. In this example, there are a vehicle 221, a bicycle 222, and a pedestrian 223 in the peripheral image 202.

The vehicle 221 is approaching the own vehicle from the right direction, and in association with the vehicle 221, a moving-body frame F1 and a motion prediction bar M1 are displayed.

The moving-body frame F1 surrounds the front of the vehicle 221. Therefore, the size of the moving-body frame F1 is set depending on the height and the width of the front of the vehicle 221 in the peripheral image 202. On the upper side of the moving-body frame F1, a mark that shows the type of the moving body in the moving-body frame F1 is vehicle is displayed.

The motion prediction bar M1 is a figure that is superimposed and displayed on the road surface on which the vehicle 221 is driving, and the shape of the motion prediction bar M1 is changed by the moving direction and the moving speed of the vehicle 221. Specifically, the motion prediction bar M1 extends in the moving direction of the vehicle 221 from the lower side of the moving-body frame F1 along the road surface. The front end of the motion prediction bar M1 is set to a prediction position of the front end of the vehicle 221 after x seconds. Therefore, the length of the moving direction of the vehicle 221 of the motion prediction bar M1 stretches and contracts depending on the speed of the vehicle 221. By stretching and contracting by the motion prediction bar M1, the acceleration of the vehicle 221 is shown. For example, in a case that the vehicle 221 drives at constant speed, the length of the motion prediction bar M1 is kept almost predetermined. In a case that the vehicle 221 accelerates, the motion prediction bar M1 gradually extends. In a case that the vehicle 221 decelerates, the motion prediction bar M1 gradually shortens. Moreover, depending on the moving direction of the vehicle 221, the direction of the motion prediction bar M1 is changed. The width of the motion prediction bar M1 is set to the width of the moving-body frame F1 (width of the front of the vehicle 221).

The driver may easily grasp presence and the current position of the vehicle 221 by the moving-body frame F1. Moreover, the driver may also easily grasp the predicted motion of the vehicle 221 by the motion prediction bar M1.

The bicycle 222 is approaching the own vehicle from the right direction, and in association with the bicycle 222, a moving-body frame F2 and a motion prediction bar M2 are displayed.

The moving-body frame F2 surrounds the front of the bicycle 222. Therefore, the size of the moving-body frame F2 is set depending on the height and the width of the front of the bicycle 222 and a driver thereof in the peripheral image 202. On the upper side of the moving-body frame F2, a mark that shows the type of the moving body in the moving-body frame F2 is bicycle is displayed.

The motion prediction bar M2 is superimposed and displayed on the road surface on which the bicycle 222 is running, and the shape of the motion prediction bar M2 is changed by the moving direction and the moving speed of the bicycle 222. Specifically, the motion prediction bar M2 extends in the moving direction of the bicycle 222 from the lower side of the moving-body frame F2 along the road surface. The front end of the motion prediction bar M2 is set to a prediction position of the front end of the bicycle 222 after x seconds. Therefore, the length of the moving direction of the bicycle 222 of the motion prediction bar M2 stretches and contracts depending on the speed of the bicycle 222, similarly to the motion prediction bar M1. Moreover, depending on the moving direction of the bicycle 222, the direction of the motion prediction bar M2 is changed. The width of the motion prediction bar M2 is set to the width of the moving-body frame F2 (width of the front of the bicycle 222 and the driver thereof).

The driver may easily grasp presence and the current position of the bicycle 222 by the moving-body frame F2. Moreover, the driver may also easily grasp the predicted motion of the bicycle 222 by the motion prediction bar M2.

The pedestrian 223 is in rest in the right direction of the own vehicle. Therefore, in association with the pedestrian 223, only a moving-body frame F3 is displayed, and the motion prediction bar is not displayed.

The moving-body frame F3 surrounds the front of the pedestrian 223. Therefore, the size of the moving-body frame F3 is set depending on the height and the width of the front of the pedestrian 223 in the peripheral image 202. On the upper side of the moving-body frame F3, a mark that shows the type of the moving body in the moving-body frame F3 is pedestrian is displayed.

The driver may easily grasp presence and the current position of the pedestrian 223 by the moving-body frame F3.

Moreover, for example, the color of the superimposed image (moving-body frame and motion prediction bar) is changed on the basis of the corresponding degree of risk of the moving body. For example, the colors of the moving-body frame and the motion prediction bar corresponding to the moving body that has the degree of risk 1 are set to white. The colors of the moving-body frame and the motion prediction bar corresponding to the moving body that has the degree of risk 2 are set to green. The colors of the moving-body frame and the motion prediction bar corresponding to the moving body that has the degree of risk 3 are set to yellow. The colors of the moving-body frame and the motion prediction bar corresponding to the moving body that has the degree of risk 4 are set to red. Due to this, the driver may easily grasp the degree of risk of each of the moving bodies.

Note that, in the example of Fig. 8, the color of each of the motion prediction bars cannot be classified by color, and each of the motion prediction bars is shown by a different pattern.

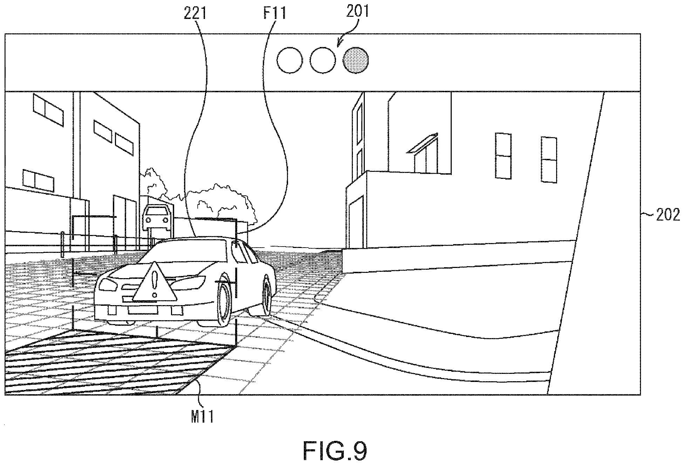

Fig. 9 shows an example of the peripheral-watching image in a case that the vehicle 221 has the degree of risk 4. In this case, the red lamp of the signal 201 lights up. Moreover, similarly to the example of Fig. 8, in association with the vehicle 221, a moving-body frame F11 and a motion prediction bar M11 are displayed. Note that the colors of the moving-body frame F11 and the motion prediction bar M11 are set to red, which shows that the vehicle 221 has the degree of risk 4. Moreover, in the moving-body frame F11, a mark that urges the driver to pay attention is displayed.

Due to this, the driver may quickly grasp risk of collision or contact with the peripheral moving body, and may take an action for avoiding an accident.

Note that, in a case that there are the plurality of moving bodies that have the degrees of risk 4, the moving-body frame shown in Fig. 9 may be displayed with respect to all of the moving bodies, and alternatively, the moving-body frame shown in Fig. 9 may be displayed with respect to only the moving body that has the highest degree of risk (for example, the moving body that has the shortest collision prediction time).

Back to Fig. 4, in a step S11, the brake controller unit 15 determines whether emergency stop is necessary or not. For example, in a case that there is no moving body that has the degree of risk 4 among the peripheral moving bodies of the own vehicle, the brake controller unit 15 determines that emergency stop is unnecessary, and processing returns to the step S1.

After that, in the step S11, the processing in the steps S1 to S11 is repeatedly executed until it is determined that emergency stop is necessary.

On the other hand, for example, in a case that there is the moving body that has the degree of risk 4 among the peripheral moving bodies of the own vehicle, the brake controller unit 15 determines that emergency stop is necessary in the step S11, and processing goes to a step S12.

In the step S12, the brake controller unit 15 controls the brake apparatus 16, and performs emergency stop of the own vehicle. Due to this, collision or contact with the peripheral moving body of the own vehicle is prevented.

After that, the peripheral-watching processing ends.

In a manner as described above, risk of collision or contact of the own vehicle with the peripheral moving body may be notified plainly, and the driver may surely recognize risk of collision or contact. Moreover, in a case that there is the moving body that has the degree of risk 4, emergency stop is performed, and as a result, occurrence of an accident may be prevented.

### <<2. Modified Example>>

Hereinafter, modified examples of the embodiment of the technology according to the present disclosure described above will be described.

### <2-1. Modified Example Related to Superimposed Image>

For example, an image other than the motion prediction bars described above may be used, and the predicted motion of the moving body may be shown.

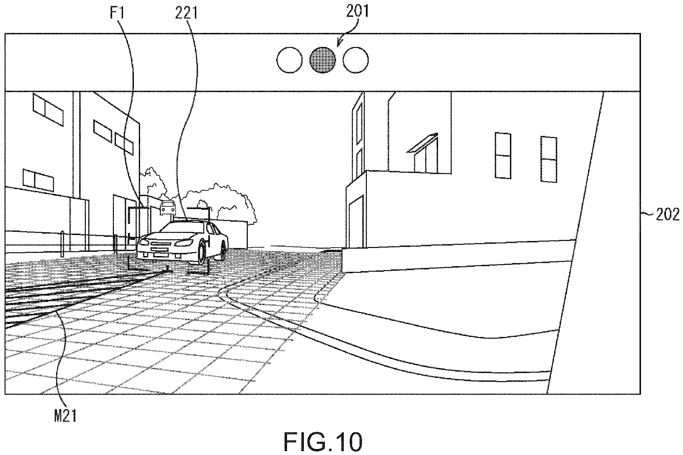

For example, by a circular-sector-shaped figure M21 in Fig. 10, the predicted motion of the vehicle 221 may be shown. The figure M21 is displayed on the road surface, and spreads in the moving direction of the vehicle 221. The angle (spread) thereof is set on the basis of, for example, prediction accuracy of the moving direction of the vehicle. For example, in a case that prediction accuracy is high, that is, a variation in the prediction result of the moving direction of the vehicle 221 is small, the circular-sector-shaped angle is also small. On the other hand, in a case that prediction accuracy is low, that is, the variation in the prediction result of the moving direction of the vehicle 221 is large, the circular-sector-shaped angle is also large. Moreover, similarly to the motion prediction bars described above, the length of the moving direction of the vehicle 221 of the figure M21 is changed by the moving speed of the vehicle 221, and the direction of the figure M21 is changed by the moving direction of the vehicle 221.

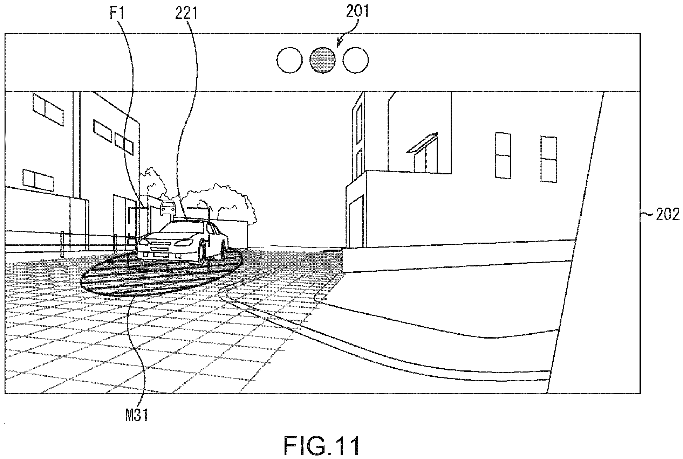

Moreover, for example, by a circular-sector-shaped figure M31 in Fig. 11, the predicted motion of the vehicle 221 may be shown. The figure M31 surrounds the periphery of the vehicle 221 on the road surface. Similarly to the motion prediction bars described above, the length of the moving direction of the vehicle 221 of the figure M31 is changed by the moving speed of the vehicle 221, and the direction of the figure M31 is changed by the moving direction of the vehicle 221.

Furthermore, for example, the shape of the moving-body frame may be the edged shape of the edge of the moving body. Due to this, the driver may more easily grasp the shape of the peripheral moving body of the own vehicle.

Moreover, for example, a display effect (color, shape, or the like) of the moving-body frame may be changed by the type of the moving body. Furthermore, for example, the moving body may be classified into types other than the five types of vehicle, motorbike, bicycle, pedestrian, and other, and the display effect of the moving-body frame may be changed by the type of the moving body.

Moreover, in a case that there are many moving bodies in the peripheral image, when the superimposed images of all of the moving bodies are displayed, the image is sometimes actually invisible. Therefore, for example, by controlling presence or absence of display of the superimposed image on the basis of the degree of risk of each of the moving bodies, the number of the moving bodies, the superimposed image of which is displayed, may be limited.

For example, the superimposed images may be displayed with respect to only the n moving bodies that have the higher degrees of risk (for example, n moving bodies in order of shorter collision prediction time). Moreover, for example, in a case that the number of the moving bodies in the peripheral image exceeds a predetermined threshold, the superimposed images may be displayed with respect to only the moving bodies, the degrees of risk of which are a predetermined threshold (for example, degree of risk 3 or more).

Moreover, as described above, the example in which the color of the superimposed image is changed depending on the degree of risk of the corresponding moving body is shown. Alternatively, another display effect may be changed. For example, the transmittance or the pattern of the moving-body bar may be changed. Moreover, for example, a plurality of display effects such as the color and the transmittance of the superimposed image may be changed. Furthermore, for example, the superimposed image with respect to the moving body that has the degree of risk 4 may be blinked.

Moreover, for example, in a case that the display unit 14 includes a transmission-type display that is provided and superimposed on the windshield part of the own vehicle, the superimposed image may be superimposed on the field of view of a person such as the driver of the own vehicle by AR (Augmented Reality) or the like.

### <2-2. Modified Example Related to Structure of System>

The structure example of the on-vehicle system 10 in Fig. 1 is one example, and may be modified according to demand.

For example, the information processing unit 13 may be separated into the plurality of units, a part of the information processing unit 13 may be combined with the brake controller unit 15, and the brake controller unit 15 may be included in the information processing unit 13.

Moreover, for example, a part of the peripheral sensor data may be made to be acquired from a sensor that is provided on the outside of the own vehicle (for example, along a roadway).

### <2-3. Application Example>

The present technology may also be applied to a movable object other than the vehicle. For example, by a transmission-type display that is provided and superimposed on a shield of a helmet of a driver driving a motorbike, the superimposed image may be superimposed on the field of view of the driver by AR or the like.

Moreover, as described above, the examples in which the superimposed image is mainly displayed with respect to the driver are shown. Alternatively, the superimposed image may be displayed with respect to a person other than the driver. Furthermore, for example, in a case that a vehicle is fully-automatically driven, there is sometimes no driver substantially in the vehicle, and the superimposed image may be displayed with respect to a person in the vehicle.

### <<3. Other>>

### <3-1. Structure Example of Computer>

The above series of processing may be performed not only by hardware but also by software. When the series of processing is performed by software, a program constituting the software is installed in a computer. Here, examples of the computer include a computer incorporated in dedicated hardware and a general-purpose personal computer capable of performing various functions with the installation of various programs.

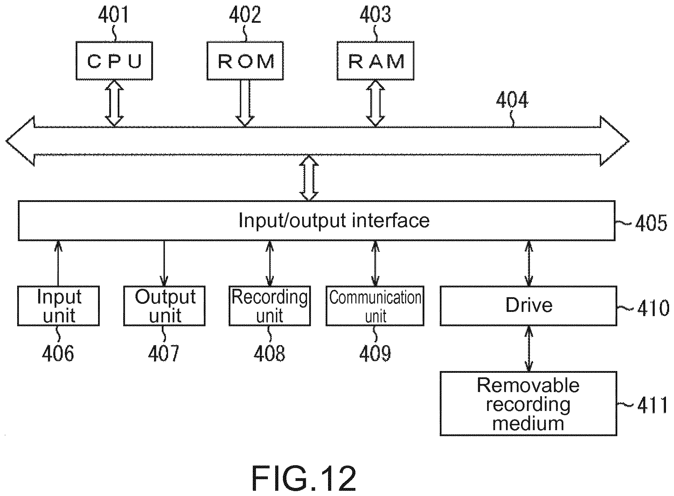

Fig. 12 is a block diagram showing a structure example of the hardware of a computer that performs the above series of processing according to a program.

In the computer, a CPU (Central Processing Unit) 401, a ROM (Read Only Memory) 402, and a RAM (Random Access Memory) 403 are connected to one another via a bus 404.

In addition, an input/output interface 405 is connected to the bus 404. An input unit 406, an output unit 407, a recording unit 408, a communication unit 409, and a drive 410 are connected to the input/output interface 405.

The input unit 406 includes an input switch, a button, a microphone, an imaging element, or the like. The output unit 407 includes a display, a speaker, or the like. The recording unit 408 includes a hard disc, a non-volatile memory, or the like. The communication unit 409 includes a network interface or the like. The drive 410 drives a removable recording medium 411 such as a magnetic disc, an optical disc, a magnetic optical disc, and a semiconductor memory.

In the computer structured as described above, the CPU 401 loads, for example, a program recorded on the recording unit 408 into the RAM 403 via the input/output interface 405 and the bus 404 to be performed, whereby the above series of processing is performed.

The program performed by the computer (CPU 401) may be recorded on, for example, the removable recording medium 411 serving as a package medium or the like to be provided. Further, the program may be provided via a wired or wireless transmission medium such as a local area network, the Internet, and digital satellite broadcasting.

In the computer, the program may be installed in the recording unit 408 via the input/output interface 405 by the attachment of the removable recording medium 411 to the drive 410. Further, the program may be received by the communication unit 409 via a wired or wireless transmission medium and installed in the recording unit 408. Besides, the program may be installed in advance in the ROM 402 or the recording unit 408.

Note that the program performed by the computer may be a program that is chronologically processed in order described in the present specification, or may be a program that is processed in parallel or at an appropriate timing such as when invoked.

Moreover, in the present specification, a system represents the aggregate of a plurality of constituents (such as apparatuses and modules (components)), and all the constituents may not be necessarily accommodated in the same housing. Accordingly, both a plurality of apparatuses accommodated in separate housings and connected to each other via a network and one apparatus in which a plurality of modules are accommodated in one housing are systems.

Further, the embodiment of the present technology is not limited to the above embodiment but may be modified in various ways without departing from the spirit of the present technology.

For example, the present technology may employ the structure of cloud computing in which one function is shared and cooperatively processed between a plurality of apparatuses via a network.

In addition, each of the steps described in the above flowchart may be performed not only by one apparatus but also by a plurality of apparatuses in a shared fashion.

Further, when one step includes a plurality of processing, the plurality of processing included in the one step may be performed not only by one apparatus but also by a plurality of apparatuses in a shared fashion.

### <3-2. Example of Combining Configurations Together>

The present technology can also employ the following configurations.

(1) An information processing apparatus, including:
   a moving-body detection unit that detects a moving body around a movable object on the basis of information input from a sensor; and
   an image processing unit that generates a first image which is displayed in association with the moving body, a shape of the first image being changed depending on a moving direction and moving speed of the moving body.
(2) The information processing apparatus according to (1), in which
   the first image includes a bar that extends in the moving direction from the moving body, a length of the moving direction being changed depending on the moving speed of the moving body.
(3) The information processing apparatus according to (2), in which
   a width of the bar is changed depending on a width of the moving body.
(4) The information processing apparatus according to (1), in which
   the first image includes a circular-sector-shaped figure that spreads in the moving direction of the moving body from the moving body, a length of the figure in the moving direction being changed depending on the moving speed of the moving body.
(5) The information processing apparatus according to (4), in which
   an angle of the circular-sector-shaped figure is changed depending on prediction accuracy of the moving direction of the moving body.
(6) The information processing apparatus according to any one of (1) to (5), in which
   the image processing unit changes a display effect of the first image on the basis of a degree of risk of collision or contact of the moving body with the movable object.
(7) The information processing apparatus according to (6), in which
   the image processing unit changes at least one of a color or transmittance of the first image on the basis of the degree of risk.
(8) The information processing apparatus according to any one of (1) to (7), in which
   the image processing unit controls presence or absence of display of the first image with respect to the moving body on the basis of a degree of risk of collision or contact of the moving body with the movable object.
(9) The information processing apparatus according to any one of (1) to (8), in which
   the image processing unit generates a second image indicating a position of the moving body.
(10) The information processing apparatus according to (9), in which
   the second image includes a frame surrounding the moving body.
(11) The information processing apparatus according to (9) or (10), in which
   the image processing unit changes the second image on the basis of a type of the moving body.
(12) The information processing apparatus according to (11), in which
   the type of the moving body is classified into at least four types including a vehicle, a motorbike, a bicycle, and a pedestrian.
(13) The information processing apparatus according to any one of (1) to (12), in which
   the image processing unit superimposes the first image on a peripheral image, which is an image showing a periphery of the movable object, or a field of view of a person on the movable object.
(14) The information processing apparatus according to (13), in which
   the image processing unit superimposes the first image on a road surface in the peripheral image or in the field of view of the person.
(15) The information processing apparatus according to (13) or (14), in which
   the image processing unit superimposes a grid on the road surface in the peripheral image or in the field of view of the person.
(16) The information processing apparatus according to any one of (1) to (15), in which
   the image processing unit further controls display of a signal indicating a degree of risk of collision or contact of the movable object with any of the peripheral moving body.
(17) The information processing apparatus according to any one of (1) to (16), further including
   a motion predicting unit that predicts a motion of the detected moving body.
(18) An information processing method, including:
   a moving-body detection step of detecting a moving body around a movable object; and
   an image processing step of generating an image which is displayed in association with the moving body, a shape of the image being changed depending on a moving direction and moving speed of the moving body around the movable object.
(19) A program, which executes processing including:
   a moving-body detection step of detecting a moving body around a movable object; and
   an image processing step of generating an image which is displayed in association with the moving body, a shape of the image being changed depending on a moving direction and moving speed of the moving body around the movable object.
(20) A movable object, including:
   a sensor that is arranged on a main body and is used for detecting a peripheral status;
   a moving-body detection unit that detects a peripheral moving body on the basis of a detection result from the sensor;
   a motion predicting unit that predicts a motion of the detected moving body; and
   a display unit that displays an image, a shape of which is changed depending on a moving direction and moving speed of the detected moving body.

### Reference Signs List

- 10: on-vehicle system
- 11: peripheral sensor
- 12: vehicle-information sensor
- 13: information processing unit
- 14: display unit
- 15: brake controller unit
- 16: brake apparatus
- 31: peripheral-status detection unit
- 32: motion predicting unit
- 33: collision predicting unit
- 34: HMI controller unit
- 100: vehicle
- 101 to 104: camera
- 201: signal
- 202: peripheral image
- F1 to F3: moving-body frame
- M1 to M11: moving-body bar
- M21, M31: figure

## Claims

1. An information processing apparatus, comprising:
a moving-body detection unit that detects a moving body around a movable object on a basis of information input from a sensor; and
an image processing unit that generates a first image which is displayed in association with the moving body, a shape of the first image being changed depending on a moving direction and moving speed of the moving body.

2. The information processing apparatus according to claim 1, wherein
the first image includes a bar that extends in the moving direction from the moving body, a length of the moving direction being changed depending on the moving speed of the moving body.

3. The information processing apparatus according to claim 2, wherein
a width of the bar is changed depending on a width of the moving body.

4. The information processing apparatus according to claim 1, wherein
the first image includes a circular-sector-shaped figure that spreads in the moving direction of the moving body from the moving body, a length of the figure in the moving direction being changed depending on the moving speed of the moving body.

5. The information processing apparatus according to claim 4, wherein
an angle of the circular-sector-shaped figure is changed depending on prediction accuracy of the moving direction of the moving body.

6. The information processing apparatus according to claim 1, wherein
the image processing unit changes a display effect of the first image on a basis of a degree of risk of collision or contact of the moving body with the movable object.

7. The information processing apparatus according to claim 6, wherein
the image processing unit changes at least one of a color or transmittance of the first image on a basis of the degree of risk.

8. The information processing apparatus according to claim 1, wherein
the image processing unit controls presence or absence of display of the first image with respect to the moving body on a basis of a degree of risk of collision or contact of the moving body with the movable object.

9. The information processing apparatus according to claim 1, wherein
the image processing unit generates a second image indicating a position of the moving body.

10. The information processing apparatus according to claim 9, wherein
the second image includes a frame surrounding the moving body.

11. The information processing apparatus according to claim 9, wherein
the image processing unit changes the second image on a basis of a type of the moving body.

12. The information processing apparatus according to claim 11, wherein
the type of the moving body is classified into at least four types including a vehicle, a motorbike, a bicycle, and a pedestrian.

13. The information processing apparatus according to claim 1, wherein
the image processing unit superimposes the first image on a peripheral image, which is an image showing a periphery of the movable object, or a field of view of a person on the movable object.

14. The information processing apparatus according to claim 13, wherein
the image processing unit superimposes the first image on a road surface in the peripheral image or in the field of view of the person.

15. The information processing apparatus according to claim 13, wherein
the image processing unit superimposes a grid on the road surface in the peripheral image or in the field of view of the person.

16. The information processing apparatus according to claim 1, wherein
the image processing unit further controls display of a signal indicating a degree of risk of collision or contact of the movable object with any of the peripheral moving body.

17. The information processing apparatus according to claim 1, further comprising
a motion predicting unit that predicts a motion of the detected moving body.

18. An information processing method, comprising:
a moving-body detection step of detecting a moving body around a movable object; and
an image processing step of generating an image which is displayed in association with the moving body, a shape of the image being changed depending on a moving direction and moving speed of the moving body around the movable object.

19. A program, which causes a computer to execute processing including:
a moving-body detection step of detecting a moving body around a movable object; and
an image processing step of generating an image which is displayed in association with the moving body, a shape of the image being changed depending on a moving direction and moving speed of the moving body around the movable object.

20. A movable object, comprising:
a sensor that is arranged on a main body and is used for detecting a peripheral status;
a moving-body detection unit that detects a peripheral moving body on a basis of a detection result from the sensor;
a motion predicting unit that predicts a motion of the detected moving body; and
a display unit that displays an image, a shape of which is changed depending on a moving direction and moving speed of the detected moving body.
